# EUROPÄISCHE PATENTSCHRIFT

(11) **EP 1 700 672 B1**
(45) Veröffentlichungstag und Bekanntmachung des Hinweises auf die Patenterteilung: **28.10.2009**
(21) Anmeldenummer: 06101008.8
(22) Anmeldetag: 30.01.2006
(51) Int. Cl.: B25D 17/20, B25F 5/00, B23Q 11/12, B23Q 5/04, B23B 45/00

(54) **Vorsatzgerät**
Attachment
Adaptateur

(30) Priorität: 07.03.2005 DE 102005000018
(43) Veröffentlichungstag der Anmeldung: 13.09.2006
(73) Patentinhaber: HILTI Aktiengesellschaft, 9494 Schaan (LI)
(72) Erfinder: Greitmann, Ralf, 86916, Kaufering (DE); Schadoffsky, Olaf, 86899, Landsberg (DE); Barimani, Cyrus, 86807, Buchloe (DE)
(74) Vertreter: Wildi, Roland

(56) Entgegenhaltungen:
- DE-A1- 4 445 103
- US-A- 2 342 610
- US-A- 2 377 271

## Beschreibung

### Technisches Gebiet

Die Erfindung betrifft ein Vorsatzgerät mit einem Aussengehäuse, einer Werkzeugaufnahme für ein Werkzeug und einem Kupplungsabschnitt, der mit einer zumindest drehenden Antriebsspindel einer Handwerkzeugmaschine kuppelbar ist, wobei eine Kühleinrichtung im Vorsatzgerät vorgeschen ist, die zumindest ein drehantreibbares Lüfterrad umfasst.

### Stand der Technik

Mittels solcher Vorsatzgeräte lässt sich der Einsatzbereich einer Handwerkzeugmaschine mit einer zumindest drehenden Antriebsspindel, wie beispielsweise eines Bohrhammers mit einem elektropneumatischen Schlagwerk, massgeblich erweitern. Das Vorsatzgerät ist z. B. als ein Werkzeughalter ausgebildet und mittels des Kupplungsabschnitts an der zumindest drehenden Antriebsspindel der Handwerkzeugmaschine ankuppelbar. Der Werkzeughalter weist als Werkzeugaufnahme ein entsprechend dem aufzunehmenden Einsteckende des festzulegenden Bohrers, Hammerbohrers oder Meisselwerkzeugs ausgebildetes Futter, wie ein Standard-, ein Dreibacken- oder Zweibackenfutter auf. Somit sind verschiedene Werkzeuge, die unterschiedliche Arten von Einsteckenden aufweisen können, an ein und derselben Handwerkzeugmaschine festlegbar. Das Vorsatzgerät kann ferner als Winkelbohr-Vorsatzgerät, als Schraub-Vorsatzgerät, als Vorsatzgerät zum Gewindeschneiden, usw. ausgebildet sein, welches mittels des Kupplungsabschnitts an der Antriebsspindel der zumindest drehenden Handwerkzeugmaschine ankuppelbar ist.

In der DE 35 15 661 A1 sind verschiedene Vorsatzgeräte gezeigt, die über einen Kupplungsabschnitt an der Antriebsspindel eines Drehschlagbohrhammers festlegbar ist. Nachteilig an der bekannten Lösung ist, dass im Betrieb innerhalb des Aussengehäuses des Vorsatzgerätes hohe Temperaturen auftreten können, so dass ohne eine Kühlung des Vorsatzgerätes dieses im Dauerbetrieb nur eine begrenzte Zeit benutzt werden kann. Im schlimmsten Fall kann es im Dauerbetrieb zu einem thermischen Ausfall kommen. Dies trifft insbesondere bei einem Winkelbohr-Vorsatzgerät zu, bei dem die infolge der Umlenkung entstehenden Verluste zusätzlich in Wärme umgewandelt werden.

Aus der DE 196 26 254 A1 ist bekannt, über axiale Luftdurchtrittsschlitze Kühlluft aus der Handwerkzeugmaschine in einen als Vorsatzgerät ausgebildeten Werkzeughalter zu leiten. Nachteilig an der bekannten Lösung ist, dass diese Kühlluft von dem Motor, dem Getriebe und dem Schlagwerk stark vorgewärmt ist und der Werkzeughalter durch die vorgewärmte Abluft nicht mehr ausreichend gekühlt wird. Zudem stellt der Werkzeughalter für den Kühlluftstrom der Handwerkzeugmaschine einen zusätzlichen Widerstand dar, so dass das Lüfterelement in der Handwerkzeugmaschine zusätzlich belastet wird und im Dauerbetrieb Schaden nehmen kann.

Aus der CH 692 488 A5 ist eine Handwerkzeugmaschine mit einem Vorsatzgerät bekannt, bei der Ausblasöffnungen in dem Maschinengehäuse mittels eines Leitelements abgedeckt werden, so dass die aus der Handwerkzeugmaschine ausgeblasene Kühlluft über einen Kühlkanal zu einem zu kühlenden Werkzeugbetätigungsbereich des Vorsatzgerätes geführt wird. Auch bei dieser bekannten Lösung ist nachteilig, dass zur Kühlung des Vorsatzgerätes vorgewärmte Kühlluft verwendet sowie das Lüfterelement in der Handwerkzeugmaschine zusätzlich belastet wird.

Die US 2,377,271 zeigt eine an einer Werkzeugmaschine anordnenbare Wellenanordnung mit einem luftgekühlten Handstück am vorderen Ende. Die Wellenanordnung weist ein Aussengehäuse, eine flexible Antriebswelle mit einer Werkzeugaufnahme für ein Werkzeug und mit einem Kupplungsabschnitt auf, der mit der drehenden Antriebsspindel der Werkzeugmaschine kuppelbar ist. Zur Kühlung des Handstücks ist eine Kühleinrichtung mit einem drehantreibbaren Lüfterrad an der Werkzeugaufnahme der flexiblen Antriebswelle vorgesehen.

### Darstellung der Erfindung

Aufgabe der Erfindung ist es, die ausreichende Kühlung eines drehenden Vorsatzgerätes auch im Dauerbetrieb ohne eine wesentliche zusätzliche Belastung des Lüfterelementes in der Handwerkzeugmaschine sicherzustellen.

Die Aufgabe ist durch die Merkmale des unabhängigen Anspruchs gelöst. Vorteilhafte Weiterbildungen sind in den Unteransprüchen dargelegt.

Gemäss der Erfindung ist das zumindest eine Lüfterrad drehfest an dem Kupplungsabschnitt des Vorsatzgeräts angeordnet. Der von dem zumindest einen Lüfterrad erzeugte Kühlluftstrom wird im Bereich der Handwerkzeugmaschine erzeugt und kann durch das gesamte Aussengehäuse des Vorsatzgerätes zur Kühlung desselben geleitet werden. Zur drehfesten Festlegung des zumindest einen Lüfterrads ist dieses beispielsweise auf den Kupplungsabschnitt aufgepresst oder aufgeklebt. Bei einem Lüfterrad aus Kunststoff kann dieses z. B. auf den Kupplungsabschnitt aufgeschrumpft werden.

Mittels der drehenden Antriebsspindel der Handwerkzeugmaschine wird die Kühleinrichtung innerhalb des Vorsatzgerätes direkt oder indirekt angetrieben und so ein Luftstrom zur Kühlung innerhalb des Vorsatzgerätes erzeugt. Durch die zusätzliche Kühleinrichtung wird die Temperatur im Vorsatzgerät reduziert und die Standzeit des Vorsatzgerätes im Dauerbetrieb erhöht. Das Lüfterelement der Handwerkzeugmaschine muss nur auf die Kühlung der Handwerkzeugmaschine und nicht noch zusätzlich zur Kühlung des Vorsatzgerätes ausgelegt sein.

Die Kühleinrichtung zur Erzeugung des Kühlluftstroms im Vorsatzgerät umfasst zumindest ein, drehantreibbares Lüfterrad. Je nach Bedarf des zur Kühlung des Vorsatzgerätes erforderlichen Kühlluftstroms können auch mehr als ein Lüfterrad drehbar im Vorsatzgerät vorgesehen sein.

Vorzugsweise ist zumindest eine Austrittsöffnung für den Austritt des Kühlluftstroms aus dem Vorsatzgerät im Aussengehäuse des Vorsatzgeräts vorgesehen, welche beispielsweise in einem, der Handwerkzeugmaschine abgewandten Bereich des Vorsatzgerätes angeordnet ist. Dadurch strömt der von der Kühleinrichtung erzeugte Kühlluftstrom durch das Vorsatzgerät und führt die im Vorsatzgerät vorhandene Wärme ab.

Bevorzugt ist zumindest eine Einlassöffnung für den Eintritt von der Kühleinrichtung angesaugter Umgebungsluft in das Vorsatzgerät im Aussengehäuse des Vorsatzgeräts vorgesehen. Somit wird zur Kühlung des Vorsatzgeräts ein Kühlluftstrom erzeugt, der im Wesentlichen nicht durch die Handwerkzeugmaschine vorgewärmt wurde. Mittels des separaten, von den Kühlluftströmen der Handwerkzeugmaschine unabhängigen Kühlluftstroms für das Vorsatzgerät wird eine lange Standzeit desselben auch im Dauerbetrieb sichergestellt.

Vorzugsweise umfasst das Vorsatzgerät weiter eine Antriebswelle, wobei vorteilhafterweise das zumindest eine Lüfterrad drehfest an der Antriebswelle des Vorsatzgeräts angeordnet ist. Die Antriebswelle dient beispielsweise dem Antrieb einer Werkzeugaufnahme eines Winkelbohrvorsatzes. Zur drehfesten Festlegung des zumindest einen Lüfterrads ist dieses beispielsweise auf die Antriebswelle aufgepresst, aufgeklebt oder, bei einem Lüfterrad aus Kunststoff, aufgeschrumpft. Bei der Anordnung von mehr als einem Lüfterrad in einem Vorsatzgerät ist beispielsweise ein Lüfterrad an dem Kupplungsabschnitt und die weiteren Lüfterräder sind in einem der Handwerkzeugmaschine abgewandten Bereich der Antriebswelle an derselben angeordnet.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnung

Die Erfindung wird nachstehend anhand zweier Ausführungsbeispiele näher erläutert. Es zeigen:
- Fig. 1: einen Längsschnitt durch ein, an einer Handwerkzeugmaschine angeordnetes Winkelbohr-Vorsatzgerät; und
- Fig. 2: einen Längsschnitt durch ein an einer Handwerkzeugmaschine angeordneten, als Vorsatzgerät ausgebildeten Werkzeughalter.

Grundsätzlich sind in den Figuren gleiche Teile mit den gleichen Bezugszeichen versehen.

### Wege zur Ausführung der Erfindung

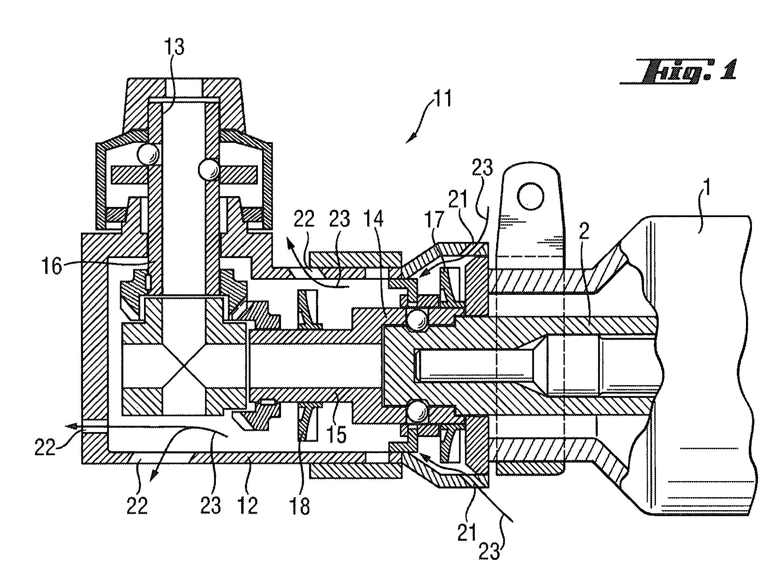

Das in der Fig. 1 dargestellte Vorsatzgerät 11 ist als Winkelbohr-Vorsatzgerät für eine Handwerkzeugmaschine 1 mit einer zumindest drehenden Antriebsspindel 2, wie z. B. ein elektropneumatischer Bohrhammer, ausgebildet und weist ein Aussengehäuse 12, eine Werkzeugaufnahme 13 für ein Werkzeug, wie einen Bohrer oder einen Hammerbohrer auf. Weiter weist das Vorsatzgerät 11 einen Kupplungsabschnitt 14 auf, der mit der Antriebsspindel 2 der Handwerkzeugmaschine 1 kuppelbar ist. Für den Antrieb des in der Werkzeugaufnahme 13 angeordneten Werkzeugs ist anschliessend an den Kupplungsabschnitt 14 eine zweiteilige Antriebswelle 15, 16 im Aussengehäuse 12 des Vorsatzgerätes 11 vorgesehen.

Die Kühleinrichtung umfasst zwei drehantreibbare Lüfterräder 17, 18, wobei das erste Lüfterrad 17 drehfest an dem Kupplungsabschnitt 14 und das zweite Lüfterrad 18 drehfest an der Antriebswelle 15 angeordnet ist. Im Aussengehäuse 12 sind Einlassöffnungen 21 für den Eintritt von Umgebungsluft sowie mehrere Austrittsöffnungen 22 für den Austritt des von den Lüfterrädern erzeugten Kühlluftstroms 23 vorgesehen. Anstelle von zwei Lüfterrädern 17, 18 kann das Vorsatzgerät 11 auch nur ein, an dem Kupplungsabschnitt 14 oder der Antriebswelle 15 angeordnetes Lüfterrad aufweisen.

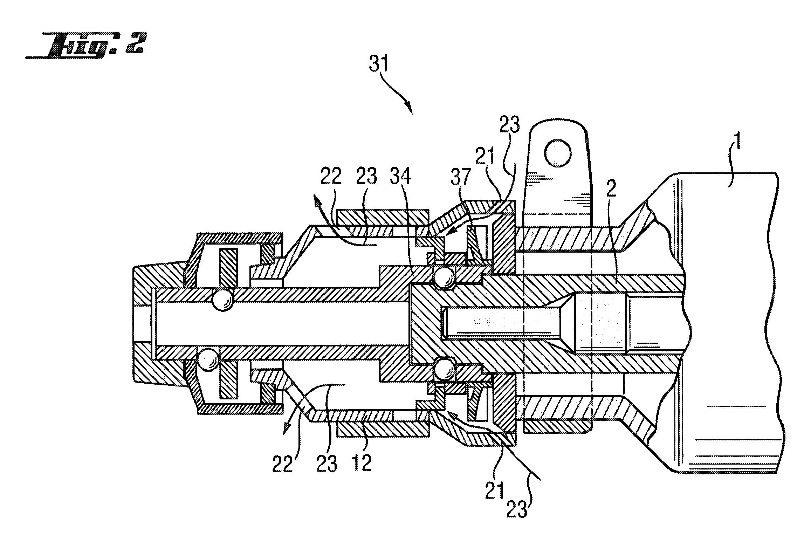

Das in der Fig. 2 dargestellte Vorsatzgerät 31 ist als ein Werkzeughalter für Bohrer, Hammerbohrer oder Meisselwerkzeuge ausgebildet und weist zu seiner Kühlung als Kühleinrichtung ein drehfest an dem Kupplungsabschnitt 34 angeordnetes Lüfterrad 37 auf.

## Patentansprüche

1. Vorsatzgerät mit einem Aussengehäuse (12), einer Werkzeugaufnahme (13) für ein Werkzeug und einem Kupplungsabschnitt (14; 34), der mit einer zumindest drehenden Antriebsspindel (2) einer Handwerkzeugmaschine (1) kuppelbar ist, wobei eine Kühleinrichtung im Vorsatzgerät (11; 31) vorgesehen ist die zumindest ein drehantreibbares Lüfterrad (17, 18; 37) umfasst,
**dadurch gekennzeichnet, dass** das zumindest eine Lüfterrad (17; 37) drehfest an dem Kupplungsabschnitt (14; 34) des Vorsatzgeräts (11; 31) angeordnet ist.

2. Vorsatzgerät nach Anspruch 1, **dadurch gekennzeichnet, dass** zumindest eine Austrittsöffnung (22) im Aussengehäuse (12) des Vorsatzgeräts (11; 31) vorgesehen ist.

3. Vorsatzgerät nach Anspruch 1 oder 2, **dadurch gekennzeichnet, dass** zumindest eine Einlassöffnung (21) im Aussengehäuse (12) des Vorsatzgeräts (11; 31) vorgesehen ist.

4. Vorsatzgerät nach Anspruch 1, **dadurch gekennzeichnet, dass** das Vorsatzgerät (11) weiter eine Antriebswelle (15, 16) umfasst, wobei optional das zumindest eine Lüfterrad (18) drehfest an der Antriebswelle (15) des Vorsatzgeräts (11) angeordnet ist.

## Claims

1. An attachment comprising an outer housing (12), a tool holder (13) for receiving a tool, and a coupling section (14; 34) for coupling with an at least rotary drive spindle (2) of a hand-held power tool (1), in which case a cooling device comprising at least one rotary-driven fan wheel (17, 18; 37) is provided in the attachment (11; 31), **characterized in that** the at least one fan wheel (17; 37) is mounted on the coupling section (14; 34) of the attachment (11; 31) for joint rotation therewith.

2. An attachment according to Claim 1, **characterized in that** at least one outlet opening (22) is provided in the outer housing (12) of the attachment (11 : 31).

3. An attachment according to Claim 1 or 2, **characterized in that** at least one inlet opening (21) is provided in the outer housing (12) of the attachment (11; 31).

4. An attachment according to Claim 1, **characterized in that** the attachment (11) further comprises a drive shaft (15, 16), the at least one fan wheel (18) optionally being mounted on the drive shaft (15) of the attachment (1) for joint rotation therewith.

## Revendications

1. Adaptateur comprenant un carter extérieur (12), un raccord d'outil (13) pour un outil et une portion d'accouplement (14 ; 34) apte à être accouplée à une broche d'entraînement au moins rotative (2) d'un appareil portatif (1), un dispositif de refroidissement qui comprend au moins une roue de ventilation entraîné en rotation (17, 18 ; 37), **caractérisé en ce que** la roue de ventilation (17 ; 37), étant prévu dans l'adaptateur (11 ; 31) au nombre d'au moins une, est solidarisée en rotation à la portion d'accouplement (14 ; 34) de 1 adaptateur (11 ; 31).

2. Adaptateur selon à revendication 1, **caractérisé en ce qu'**au moins un évent (22) est ménaçé dans le carter extérieur (12) de l'adaptateur (11 ; 31).

3. Adaptateur selon la revendication 1 ou 2, **caractérisé en ce qu'**au moins une ouverture d'admission (21) est prévue dans le carter extérieur (12) de 1 adaptateur (11 ; 31).

4. Adaptateur selon la revendication 1, **caractérisé en ce que** l'adaptateur (11) comprend en plus un arbre d'entraînement (15, 16), la roue de ventilation (18) au nombre d'au moins une étant optionnellement solidarisée en rotation à l'arbre d'entraînement (15) de l'adaptateur (11).
